# NEW EUROPEAN PATENT SPECIFICATION

(11) **EP 0 885 702 B2**
(45) Date of publication and mention of the opposition decision: **20.10.2010**
(45) Mention of the grant of the patent: 13.10.2004
(21) Application number: 98110466.4
(22) Date of filing: 08.06.1998
(51) Int. Cl.: B28C 5/42

(54) **Reducer for a concrete mixer**
Reduktionsgetriebe für eine Betonmischmaschine
Réducteur méchanique pour mélangeur à béton

(30) Priority: 10.06.1997 IT BO970351
(43) Date of publication of application: 23.12.1998
(73) Proprietor: Bonfiglioli Riduttori S.p.A., 40012 Calderara di Reno (IT)
(72) Inventor: Zinzani, Giovanni, 48018 Faenza (IT); Lodola, Valerio, 47100 Forli' (IT)
(74) Representative: Jorio, Paolo

(56) References cited:
- EP-A- 0 482 660
- WO-A-94/23918
- DE-A- 4 314 218
- US-A- 4 335 963
- US-A- 4 453 830

## Description

The present invention relates to a reducer for a concrete mixer, and which may also be used in the event the concrete mixer is vehicle mounted.

Ready-mixed concrete is transported on trucks fitted with large tanks or concrete mixers, inside which the concrete is watered and kept moving to delay setting, and which are substantially cylindrical, comprise a top infeed opening and a bottom discharge opening, and rotate freely on the truck at an inclined angle.

All concrete mixer trucks comprise an actuator connected to the mixer via the interposition of a multistage reducer to convert the characteristic parameters - twisting torque and angular speed - of the power supplied by the actuator according to the operating specifications of the mixer.

Such reducers normally comprise an epicyclic multistage reduction assembly housed inside a casing fitted to the frame of the truck at the discharge opening end of the mixer; and the reduction assembly in turn comprises an input shaft connected to the actuator, and a transmission output flange connected coaxially and rigidly to the mixer.

In transit, the movement of the truck frame is transmitted to the mixer, thus resulting in oscillation of the mixer which is transmitted to the reducer via the output flange. To safeguard the reducer, therefore, types are manufactured in which the flange and reduction assembly are connected mechanically via the interposition of a spherical joint.

In some concrete mixer reducers, the spherical joint is formed by forming an outer portion of the casing with a spherical surface; while in others a planetary member of the final reduction stage of the reducer is fitted inside a spherical seat.

Both solutions involve drawbacks. The first in particular is subject to severe wear, due to concrete dust and dirt dispersed in the air at the construction site at which the concrete is mixed and/or poured adhering to the normally greased spherical outer surfaces. The second on the other hand poses functional problems, due to the internal members of an epicyclic reduction stage adapting poorly to being operated as rocking transmission members.

In the event of stress on the truck, and therefore on the mixer and reducer, resulting in oblique misalignment of the central axes of the flange and reduction assembly, the rigidity of the connections described impairs smooth operation of the reducer and relies entirely on the elasticity of the connecting means, which, if poor, obviously results in breakage.

A reducer for a cement mixer as per the preamble portion of present Claim 1 is known from document US-A-4 335 963.

It is an object of the present invention to provide a cement mixer reducer designed to eliminate the aforementioned drawbacks.

According to the present invention, there is provided a reducer in accordance with claim 1.

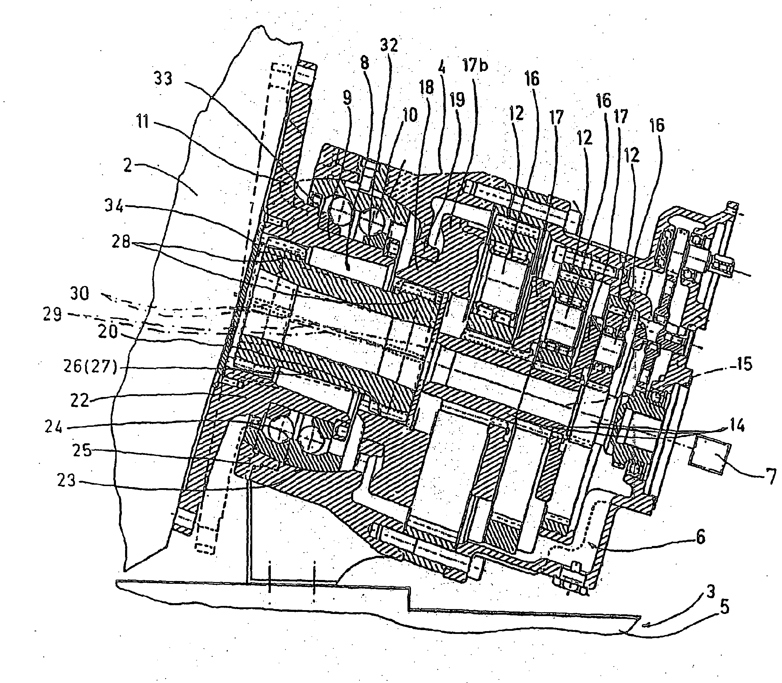

The invention will be described with reference to the accompanying drawing showing an axial section of a non-limiting embodiment.

Number 1 in the accompanying drawing indicates as a whole a reducer for a cement mixer 2 (shown only partly) mounted for rotation on a known vehicle 3 (also shown only partly).

Reducer 1 comprises a casing 4 connected rigidly to a frame 5 of vehicle 3; and a reduction assembly 6 housed inside casing 4 and driven by a rotary actuator 7 (shown schematically) carried by frame 5. Reducer 1 also comprises a connecting device 8 for connecting reduction assembly 6 to mixer 2, and which in turn comprises a sleeve 9 housed inside casing 4 via the interposition of a rolling bearing 10, and a flange 11 which is located outside casing 4, is integral and coaxial with sleeve 9, and is connected rigidly to mixer 2 by known screws (not shown).

Reduction assembly 6 comprises a number of epicyclic reduction stages 12 arranged cascade fashion downstream from an input shaft in the power propagation direction from rotary actuator 7 to mixer 2. With reference to the accompanying drawing, shaft 13 is connected rigidly to actuator 7, and reduction stages 12 are three in number and substantially identical in structure. Each reduction stage 12 comprises a sun gear 14 coaxial with an axis 15 of reduction assembly 6 and which meshes with at least three planet gears 16 equally spaced about axis 15 and meshing with a toothed portion of casing 4. The sun gear 14 of each reduction stage 12 is activated by the planet carrier 17 of the reduction stage 12 located upstream in said power propagation direction. For the sake of simplicity, only one of the three gears 16 of each reduction stage 12 is shown in the accompanying drawing.

The planet carrier 17 of the reduction stage 12 adjacent to connecting device 8 comprises an annular projection 18 coaxial with axis 15 and centered with a projection 19 of casing 4, which is also annular and obviously coaxial with projection 18. For the sake of simplicity, the planet carrier 17 in question is indicated and referred to hereinafter as 17b, and comprises at projection 18 an internally grooved seat 20 coaxial with axis 15.

At the end facing flange 11, sleeve 9 terminates with an internally grooved end portion 22; rolling bearing 10 is a double-row four-contact ball bearing for combined axial and radial loads, with the outer ring defined by a spherical surface 23; casing 4 houses bearing 10 in a spherical seat 24 centered at axis 15 and with a radius approximately equal to but no less than the radius of surface 23; and, to close seat 24, casing 4 comprises a screw cover 25 also having an inner spherical seat.

Reducer 1 also comprises a transmission member 26 connected directly to reduction assembly 6 and sleeve 9. More specifically, transmission member 26 is a substantially cylindrical floating sleeve 27 defined by two substantially spherical end portions 28, each having spherical teeth. By means of portions 28, sleeve 27 is supported by portion 22 of sleeve 9 and by projection 18 of planet carrier 17b, so that a central axis 29 of sleeve 27 is located along a line joining axis 15 of reduction assembly 6 and a central axis 30 of sleeve 9.

In conjunction with projection 18 and end portion 22, transmission member 26 may therefore be said to axially disconnect the power input to reducer 1 (shaft 13) from the power output from reducer 1 (flange 11).

More specifically, transmission member 26 enables power transmission between reduction assembly 6 and flange 11 even in the event of severe vibration of frame 5 resulting in oblique misalignment of axes 15 and 30, so that transmission member 26, projection 18 and portion 22 together define a transmission assembly 32 similar to a universal joint for connecting reduction assembly 6 and flange 11.

To make reducer 1 airtight and permit oil-bath lubrication of transmission assembly 32 and reduction assembly 6 to minimize wear of the moving parts, reducer 1 is provided, on the side facing mixer 2, with a sliding lip seal 33 for airtight connecting the outer ring of bearing 10 and an outer annular surface of portion 22 of sleeve 9; and sleeve 9 is closed axially by a cover 34 defined by a flat disk screw connected to flange 11.

## Claims

1. A reducer (1) for a cement mixer (2) supported for rotation on a supporting frame (5), said reducer (1) comprising a casing (4) connected rigidly to said frame (5); a reduction assembly (6) housed inside said casing (4); and connecting means (8) for connecting said reduction assembly (6) to said mixer (2) and in turn comprising a first hollow body (9) having a central first axis (30) and which is housed inside said casing (4) and activated by said reduction assembly (6), and a flange (11) coaxial with and connected rigidly to said first hollow body (9); said flange (11) being outside said casing (4) and connectable rigidly to said mixer (2); wherein a transmission assembly (32) is comprised similar to a universal joint; said transmission assembly (32) being located between and mechanically connecting said reduction assembly (6) having a second axis (15) and said first hollow body (9) to enable power to be transmitted even when said reduction assembly (6) and said first hollow body (9) are positioned obliquely; and wherein said first hollow body (9) is supported in rocking manner by said casing (4) via the interposition of a rolling bearing (10); said transmission assembly (32) comprising a transmission member (27) connected directly to said reduction assembly (6) and said first hollow body (9); said reducer (1) being **characterized in that** said rolling bearing (10) comprises an outer ring defined externally by a substantially spherical surface (23), said casing (4) having a spherical seat (24) for said outer ring;
said substantially spherical surface (23) having a center along said second axis (15);
and **in that** said casing (4) comprises a screw cover (25) also having an inner spherical seat in order to close said spherical seat (24).

2. A reducer as claimed in Claim 1, **characterized in that** said first hollow body (9) comprises an internally grooved first portion (22); said reduction assembly (6) having an axially-fixed second hollow body (18) rotating freely about said axis (15); said second hollow body (18) being internally grooved; said transmission member (27) being defined axially by a first and a second end portion (28, 28) having substantially spherical outer teeth; said first end portion (28) meshing with said internally grooved first portion (22); and said second end portion (28) meshing with said second hollow body (18).

3. A reducer as claimed in Claim 2, **characterized in that** said reduction assembly (6) comprises at least one gear reduction stage (12).

4. A reducer as claimed in Claim 3, **characterized in that** said reduction stage (12) is epicyclic.

5. A reducer as claimed in Claim 4, **characterized in that** said reduction assembly (6) comprises at least three reduction stages; and said rolling bearing (10) is a double-row ball bearing for combined axial and radial loads.

6. A reducer as claimed in Claim 1, **characterized in that** said transmission assembly (32) is housed entirely inside said casing (4) to permit oil-bath lubrication.

## Patentansprüche

1. Untersetzungsgetriebe (1) für eine Zementmischmaschine (2), die auf einem Unterstützungsrahmen (5) drehbar unterstützt ist, wobei das Untersetzungsgetriebe (1) versehen ist mit einem mit dem Rahmen (5) starr verbundenen Gehäuse (4); einer Untersetzungsgetriebebaueinheit (6), die in dem Gehäuse (4) untergebracht ist; und Verbindungsmitteln (8), die die Untersetzungsgetriebebaueinheit (6) mit der Mischmaschine (2) verbinden und ihrerseits einen ersten Hohlkörper (9) mit einer ersten Mittelachse (30), der in dem Gehäuse (4) untergebracht ist und durch die Untersetzungsgetriebebaueinheit (6) aktiviert wird, und einen Flansch (11), der zu dem ersten Hohlkörper (9) koaxial und mit ihm starr verbunden ist, enthalten; wobei sich der Flansch (11) außerhalb des Gehäuses (4) befindet und mit der Mischmaschine (2) starr verbindbar ist; wobei eine Kraftübertragungsbaueinheit (32) ähnlich einem Universalgelenk vorgesehen ist; wobei sich die Kraftübertragungsbaueinheit (32) zwischen der eine zweite Achse (15) aufweisenden Untersetzungsgetriebebau einheit (6) und dem ersten Hohlkörper (9) befindet und diese mechanisch miteinander verbindet, um eine Kraftübertragung selbst dann zu ermöglichten, wenn die Untersetzungsgetriebebaueinheit (6) und der erste Hohlkörper (9) schräg positioniert sind; und wobei der erste Hohlkörper (9) durch das Gehäuse (4) über die Einfügung eines Wälzlagers (10) schwingend unterstützt ist; wobei die Kraftübertragungsbaueinheit (32) ein Kraftübertragangselemänt (27) umfasst, das direkt mit der Untersetzungsgetriebebaueinheit (6) und mit dem ersten Hohlkörper (9) verbunden ist; wobei das Untersetzungsgetriebe (1) **dadurch gekennzeichnet ist, dass** das Wälzlager (10) einen Außenring aufweist, der außen durch eine im Wesentlichen sphärische Oberfläche (23) definiert ist, wobei das Gehäuse (4) einen sphärischen Sitz (24) für den Außenring besitzt; wobei die im Wesentlichen sphärische Oberfläche (23) ein Zentrum längs der zweiten Achse (15) besitzt, und dass das Gehäuse (4) eine Schraubenabdeckung (25) aufweist, die ebenfalls einen inneren sphärischen Sitz besitzt, um den sphärischen Sitz (24) abzudecken.

2. Untersetzungsgetriebe nach Anspruch 1, **dadurch gekennzeichnet, dass** der erste Hohlkörper (9) einen innen mit Nuten versehenen ersten Abschnitt (22) aufweist; wobei die Untersetzungsgetriebebaueinheit (6) einen axial festen zweiten Hohlkörper (18) besitzt, der sich um die Achse (15) frei dreht; wobei der zweite Hohlkörper (18) innen mit Nuten versehen ist; wobei das Kraftübertragungselement (27) axial durch einen ersten und einen zweiten Endabschnitt (28, 28) definiert ist, die im Wesentlichen sphärische Außenzähne besitzen; wobei, der erste Endabschnitt (28) mit dem innen mit Nuten versehenen ersten Abschnitt (22) kämmt; und der zweite Endabschnitt (28) mit dem zweiten Hohlkörper (18) kämmt.

3. Untersetzungsgetriebe nach Anspruch 2, **dadurch gekennzeichnet, dass** die Untersetzungsgetriebebaueinheit (6) wenigstens eine Untersetzungsgetriebestufe (12) aufweist.

4. Untersetzungsgetriebe nach Anspruch 3, **dadurch gekennzeichnet, dass** die Untersetzungsstufe (12) epizyklisch ist.

5. Untersetzungsgetriebe nach Anspruch 4, **dadurch gekennzeichnet, dass** die Untersetzungsgetriebebaueinheit (6) wenigstens drei Untersetzungsstufen aufweiset, und das Wälzlager (10) ein Doppelreihen-Kugellager für kombinierte axiale und radiale Lasten ist.

6. Untersetzungsgetriebe nach Anspruch 1, **dadurch gekennzeichnet, dass** die Kraftübertragungsbaueinheit (32) vollständig in dem Gehäuse (4) untergebracht ist, um eine Ölbadschmierung zu ermöglichen.

## Revendications

1. Réducteur (1) pour une bétonnière (2) supporté pour pouvoir tourner sur un bâti de support (5), ledit réducteur (1) comprenant un carter (4) relié de façon rigide audit bâti (5) ; un ensemble de réduction (6) logé à l'intérieur dudit carter (4) ; et des moyens de liaison (8) pour relier ledit ensemble de réduction (6) à ladite bétonnière (2) et comprenant à leur tour un premier corps creux (9) ayant un premier axe central (30) et qui est logé à l'intérieur dudit carter (4) et actionné par ledit ensemble de réduction (6), et une bride (11) coaxiale avec ledit premier corps creux (9) et reliée de façon rigide à celui-ci ; ladite bride (11) étant à l'extérieur dudit carter (4) et pouvant être reliée de façon rigide à ladite bétonnière (2); dans lequel un ensemble de transmission (32) est compris similaire à un joint universel ; ledit ensemble de transmission (32) étant situé entre et reliant mécaniquement ledit ensemble de réduction (6) ayant un second axe (15) et ledit premier corps creux (9) pour permettre à une puissance d'être transmise même lorsque ledit ensemble de réduction (6) et ledit premier corps creux (9) sont positionnés de façon oblique ; et dans lequel ledit premier corps creux (9) est supporté de manière basculante par ledit carter (4) par l'intermédiaire de l'interposition d'un palier à roulement (10) ; ledit ensemble de transmission (32) comprenant un élément de transmission (27) relié directement audit ensemble de réduction (6) et audit premier corps creux (9) ; ledit réducteur (1) étant **caractérisé en ce que** ledit palier à roulement (10) comprend une bague extérieure définie à l'extérieur par une surface sensiblement sphérique (23), ledit carter (4) ayant un siège sphérique (24) pour ladite bague extérieure ;
ladite surface sensiblement sphérique (23) ayant un centre le long dudit second axe (15) ;
et **en ce que** ledit carter (4) comprend un couvercle à vis (25) ayant également un siège sphérique intérieur afin de fermer ledit siège sphérique (24).

2. Réducteur selon la revendication 1, **caractérisé en ce que** ledit premier corps creux (9) comprend une première partie rainurée de façon interne (22) ; ledit ensemble de réduction (6) ayant un second corps creux fixé de façon axiale (18) tournant librement autour dudit axe (15) ; ledit second corps creux (18) étant rainuré de façon interne ; ledit élément de transmission (27) étant défini de façon axiale par une première et une seconde parties d'extrémité (28, 28) ayant des dents extérieures sensiblement sphériques ; ladite première partie d'extrémité (28) s'engrenant avec ladite première partie rainurée de façon interne (22) ; et ladite seconde partie d'extrémité (28) s'engrenant avec ledit second corps creux (18).

3. Réducteur selon la revendication 2, **caractérisé en ce que** ledit ensemble de réduction (6) comprend au moins un étage de réduction à engrenage (12).

4. Réducteur selon la revendication 3, **caractérisé en ce que** ledit étage de réduction (12) est épicycloïdal.

5. Réducteur selon la revendication 4, **caractérisé en ce que** ledit ensemble de réduction (6) comprend au moins trois étages de réduction ; et ledit palier à roulement (10) est un palier à double rangée de billes pour des charges axiale et radiale combinées.

6. Réducteur selon la revendication 1, **caractérisé en ce que** ledit ensemble de transmission (32) est logé entièrement à 1"intérieur dudit carter (4) pour permettre une lubrification par bain d'huile.
